# EUROPEAN PATENT SPECIFICATION

(11) **EP 0 328 233 B1**
(45) Date of publication and mention of the grant of the patent: **16.03.1994**
(21) Application number: 89300119.8
(22) Date of filing: 06.01.1989
(51) Int. Cl.: F16L 59/14

(54) **Protection method and apparatus**
Schutzverfahren und Vorrichtung
Procédé de protection et appareil

(30) Priority: 19.01.1988 GB 8801109
(43) Date of publication of application: 16.08.1989
(60) Divisional application: 93106707.8
(73) Proprietor: Brown, Colin, Oakham Rutland Leicestershire, LE15 8EX (GB)
(72) Inventor: Brown, Colin, Oakham Rutland Leicestershire, LE15 8EX (GB)
(74) Representative: McNeight, David Leslie

(56) References cited:
- EP-A- 0 145 831
- FR-A- 2 084 606
- GB-A- 2 166 833
- GB-A- 2 188 695
- US-A- 3 590 855
- US-A- 4 529 009

## Description

This invention relates to methods and apparatus for making a python, that is to say a bundle of tubes encased in a foam sheath such as is used for the conveyance of beverages from cellar or cool store to a dispensing point such as a bar or soft drinks counter.

Such bundles of tubes are required to be of surprisingly substantial length, and are used normally in lengths up to and exceeding 100 metres. The tube bundles are sheathed in a foam insulating material so as to maintain their low temperature up to the dispensing point, where they may need "flash" cooling or maybe heating immediately prior to dispensing in order to be served at the correct temperature.

The tube bundles, of "food grade" plastics material for the conveyance of beverages and such additional "service", e.g. coolant tubes such as may be required, are assembled into a bundle and wrapped, usually in a cling-film material. The bundles are assembled to particular requirements, some at least being standard or substantially so by virtue of their being widely specified by brewery chains or like enterprises.

As described in GB 2 166 833A, great difficulties are experienced in fitting the foam sheath on to the bundle of tubes. The practice of lubrication using talc is said there to be undesirable, but another problem is said to be that only short lengths of sheath can be pulled over the tube bundle, each length requiring to be accurately butted to its neighbour. The use of such short lengths is dictated clearly by the difficulty of using long lengths, and not, as suggested in GB 2 166 833A, because only short lengths, of a few metres, were available.

In any event, the problem is solved, according to GB 2 166 833A, by first slitting the foam sheath along its length and introducing the bundle via the slit, which is then adhesively repaired. This solution has in fact been widely adopted.

Difficulties have however arisen in practice with this method. The repaired slit constitutes a continous line of impaired thermal resistance along which condensate forms in considerable quantity. The condensate drips from the outer wrapping of the python and has obvious deleterious effects on the structure through which the python passes.

US-A-4,529,009 discloses a multiple core hose assembly comprising a plurality of discrete hose assemblies, each including a primary hose formed from a flexible synthetic plastics material, having a fluid passage extending generally longitudinally therethrough, and a plurality of generally longitudinally extending recesses adapted to seat secondary hoses; a plurality of secondary hoses formed from a flexible synthetic plastics material, seated in the primary hose recesses, the secondary hoses having fluid passages extending generally longitidunally therethrough in heat transfer relation with the primary hose passage; and a flexible tubular sheath of a thermally insulating material, the primary/secondary hose assemblies being assembled together, side-by-side, with the seated secondary hoses disposed around the primary hose passages, within the sheath. To increase the length of the sheath which may be applied in a single operation, the sheath may be expanded during insertion of the hose assemblies, for example by applying a partial vacuum to the exterior of the sheath.

A satisfactory method for doing this, however, cannot be derived from US-A-4,529,009.

The present invention provides such a satisfactory method.

The invention comprises a method for making a python by inserting a bundle of tubes into an elongate foam sheath and increasing the length of sheath which may be applied in a single operation by expanding the sheath during insertion of the bundle of tubes by applying a partial vacuum to the exterior of the sheath, characterised in that a length of foam sheath is placed in a sealable chamber and a differential pressure between the inside and outside of the sheath is applied by evacuating the chamber through a vacuum connection to the chamber so as to expand the inner diameter of the sheath, the bundle of tubes is introduced into the sheath at one end of the chamber, and passed through the expanded sheath to emerge from the other end of the chamber, and the differential pressure is then removed so that the said inner diameter resiles back to grip the bundle, in which the sealable chamber comprises an elongate box with an elongate lid extending along the length of the box and movable into an open position to allow the foam sheath to be placed in the box.

The bundle of tubes may be introduced through one end of the sheath via a funnel, and the sheath may be clamped around the funnel.

The internal diameter of the sheath may be enlarged by some 5 mm and even up to some 20 mm in some cases.

The leading end of a bundle of tubes may be attached to a pig for guiding its passage through the sheath. The pig may be hauled through the sheath by a cable and winch. The cable may first be blown through the sheath from the winch end prior to hauling.

The bundle of tubes may be inserted serially into two or more lengths of sheath. A length of some 100 metres of sheathed python may be made by inserting a bundle of tubes into four 25 metre lengths of sheath. Adjacent ends of sheath may then be butt jointed, as by adhesive. This, of course, results in a structure not unlike the original talc-assisted structure, but with longer individual lengths of sheath and fewer butt joints.

Adjacent lengths of sheath may be, for the purpose of insertion of the bundle of tubes, laid side-by-side, and the bundle of tubes guided from one sheath to the adjacent sheath by a capstan or like guide.

A desired length - say 100 metres - of bundle of tubes may be inserted through a first length of sheath, which is then released from its pneumatic expansion so as to grip the bundle, the sheath thereon being carried with the bundle as it is inserted through the or an adjacent length of sheath until it abuts thereagainst whereupon the said adjacent length is released from its pneumatic expansion.

The bundle of tubes may be wrapped prior to being inserted into the said foam sheath, and may be wrapped continuously with the insertion of the wrapped bundle into the sheath.

The invention also comprises apparatus for making a python by inserting a bundle of tubes into an elongate foam sheath and increasing the length of sheath which may be applied in a single operation by expanding the sheath during insertion of the bundle of tubes by applying a partial vacuum to the exterior of the sheath, characterised by comprising a sealable chamber in the form of an elongate box with an elongate lid extending along the length of the box and movable into an open position to allow the foam sheath to be placed in the box and means for evacuating the chamber so as to expand the inner diameter of the sheath.

Standard diameters in the python trade include 28/13, 35/13, 42/13, 48/13, 54/13 and 60/13, where the first number is the inside diameter and the second number is the wall thickness, both in millimetres.

The apparatus may comprise a sheath surround adapted to the sheath outer diameter and being apertured, for the suction to have effect. The sheath surround may be adapted to be readily substitutable by one adapted to a different diameter sheath. The apparatus may comprise a set of sheath surrounds adapted to different sheath diameters.

The apparatus also comprises funnel means through which a bundle of tubes is introduced into said sheath. Clamp means - which may be a standard hose grip sort of thing - may also be provided for clamping the sheath to the funnel means.

The apparatus may comprise pig means attachable to the leading end of a bundle of tubes for guiding said bundle through the sheath. Said pig means may comprise a bullet like member having a rearwardly-open cavity into which the said leading end of the said bundle of tubes fits. At least one tube, preferably two, of said bundle may be fastened in said pig means by a stepped locking insert which may be adapted for fastening to a hauling cable. The cable may pass through a bore in the forward end of said pig.

The apparatus may comprise cable and winch means for hauling said bundle through said sheath.

The apparatus may comprise two or more chambers adapted to accommodate separate lengths of sheath for eventual butt joining. Said two or more chambers may be arranged side-by-side, and the apparatus may comprise guide means around which the bundle can bend to pass from one chamber to the next. Said guide means may comprise capstan means.

The apparatus may also comprise bundle assembly means drawing tubes from creel means and assembling said tubes into said bundle and feeding said bundle to said chamber. The apparatus may comprise wrapping means for wrapping said bundle and may comprise bundle feeding means feeding the bundle to the chamber and comprising gripper belt means.

The apparatus may also comprise protective sheath wrap means wrapping the sheathed bundle in a protective wrap.

The invention also comprises a python made by a method or by apparatus as herein described.

One embodiment of apparatus and a method for making a python according to the invention will now be described with reference to the accompanying drawings, in which :-
- Figure 1: is a cross section of a python;
- Figure 2: is a cross section of a sheath and bundle of tubes during the introduction of the latter according to the invention;
- Figure 3: is a diagrammatic illustration of an assembly line for making the python;
- Figure 4A: is a longitudinal section through an end of a chamber of the assembly line illustrated in Figure 3;
- Figure 4B: is a cross section through a spring python end expander;
- Figure 5A: is a cross section through the chamber of Figure 4A;
- Figure 5B: is a cross section like Figure 5A, but with the chamber open;
- Figure 5C: is a cross section like Figure 5A and Figure 5B of a chamber with a lift-off lid;
- Figure 6: is a longitudinal section through a pig used in the method;
- Figure 7: is a longitudinal section through a stepped locking insert fastening for the tube bundle;
- Figure 8: is a diagrammatic plan view of an assembly line for making a longer python;
and
- Figure 9: is a part-sectional partial plan view of the assembly line of Figure 8 at a stage of the method.

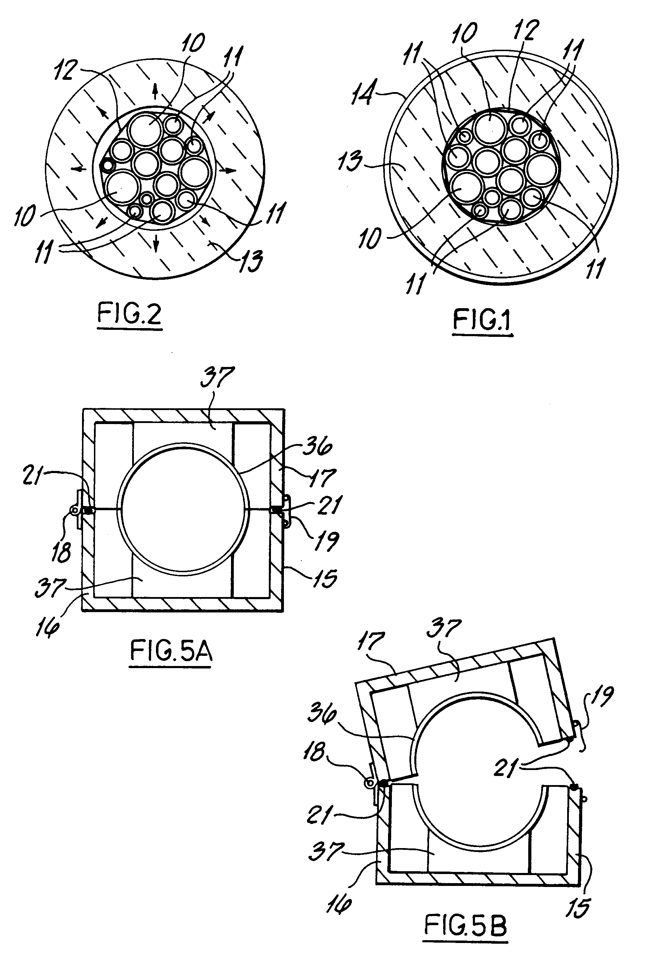

Figure 1 illustrates in cross-section a python as may be used for conveying beverages from a cellar or cold store to a bar in a public house, hotel, restaurant or like establishment.

The python comprises a bundle of tubes 11 which may be of various sizes and which are usually colour and/or number coded. Larger tubes 10 may be used for circulating water or other coolant.

The tubes 11 are wrapped in a bundle by for example a cling film wrapping 12 and are encased in a soft, flexible and resilient foam sheath 13 which is in turn wrapped in a protective plastics material outer wrapping 14. The tubes 11 are of a food grade polymer material such as polyethylene.

Such a python is know per se, but difficulty was experienced in threading the tube bundle through the sheath 13 and this could only be done in short lengths of a few metres and with the aid of talc as a lubricant. To solve that problem the tubular sheath 13 was first slit lengthwise and then opened out so it could be placed around the tube bundle. The slit was then repaired by adhesive prior to wrapping the now sheathed tube bundle in the protective wrap 14. This then gave rise to the further problem, however, that the insulation afforded by the repaired slit was inadequate and condensation would form along the length of the python at the position where the repaired slit underlay the protective wrap 14. The condensation would drip off and cause damage to woodwork and decoration in the property in which the python was installed.

The present invention provides that pythons as illustrated in Figure 1 can be made in long lengths - 20 or 25 metres is a convenient length of sleeve and several sleeves may be applied at once to make a really long python, say 100 metres long, which is standard, or even longer - with relatively few butt joints between sheath sections. In fact, the limitation is the available length of sheath material, but in practice, perhaps, it is just not convenient to work in lengths greater than 25 metres of sheath because of space limitations.

The method is illustrated simply in Figure 2, which shows the bundle of tubes 11 wrapped in cling film 12 being introduced into a foam sheath 13 which has had its internal diameter expanded as illustrated by the arrows. Once the wrapped bundle is in place, the expansion force is relieved and the foam sheath reverts to its original internal diameter to closely surround the grip the bundle. The outer wrapping 14 of Figure 1 can then be applied conventionally.

While other expansion methods may be possible, pneumatic expansion is certainly effective.

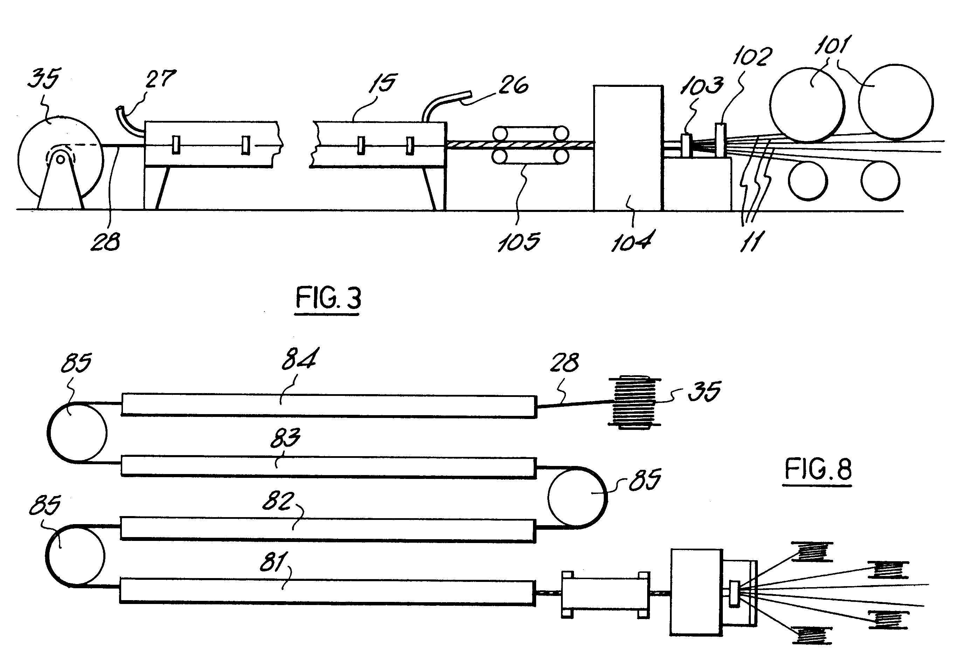

Figure 3 illustrates diagrammatically an assembly line for python in which the sheath's inner diameter is expanded pneumatically.

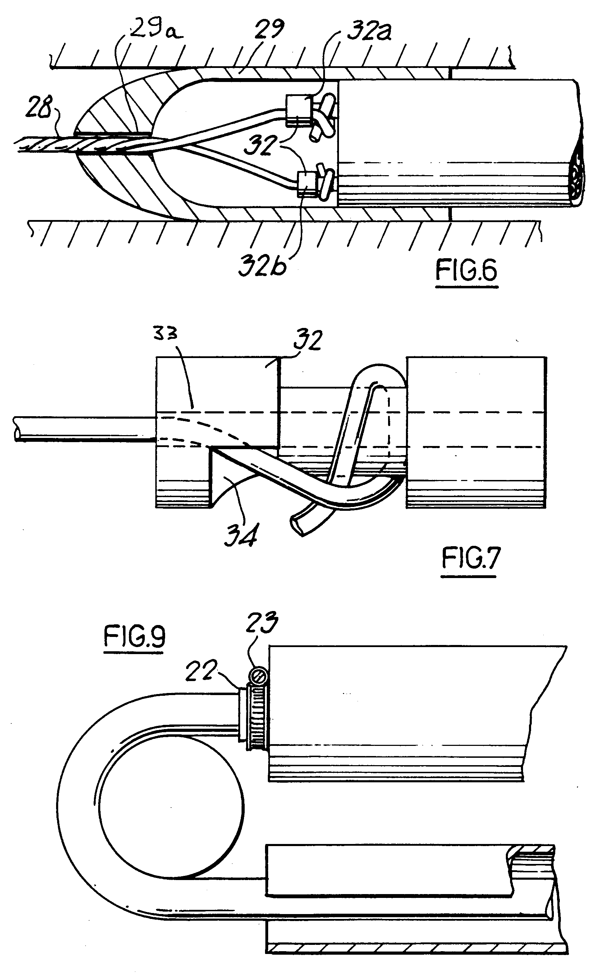

A length of sheath material 13 is placed in a sealable chamber 15 in the form of a lidded box as seen more clearly, perhaps, in the cross sections of Figure 5A and 5B, the box comprising a base 16 and a lid 17 secured thereto by a piano hinge 18. A clasp fastening arrangement shown at 19 in Figure 5A and 5B holds the lid firmly closed on to the base, the rim being sealed as by rubber or like sealing beading 21. The box has end closures which have apertures to allow the sheath to protrude slightly from each end.

In another arrangement illustrated in Figure 5C, the lid 17 is lift-off rather than hinged and sits with feet 17a in wells 16a of the base 16 which is in this case of a more profiled cross section to reduce the internal space from which air has to be evacuated.

The box can conveniently be made in a length of 25 metres, to accommodate a similar length of sheath.

At the right-hand inlet end of the box 15, the sheath protrudes over a funnel 22 which is split into two halves so that it can be applied and removed laterally without threading over an end of the sleeve, for reasons which will become clear later. The sheath end is clamped to the funnel 22 e.g. by a hose grip type of clamp 23.

The funnel 22 expands the end of the sheath and is pushed sealingly into the aperture 24 in the end enclosure of the box 15.

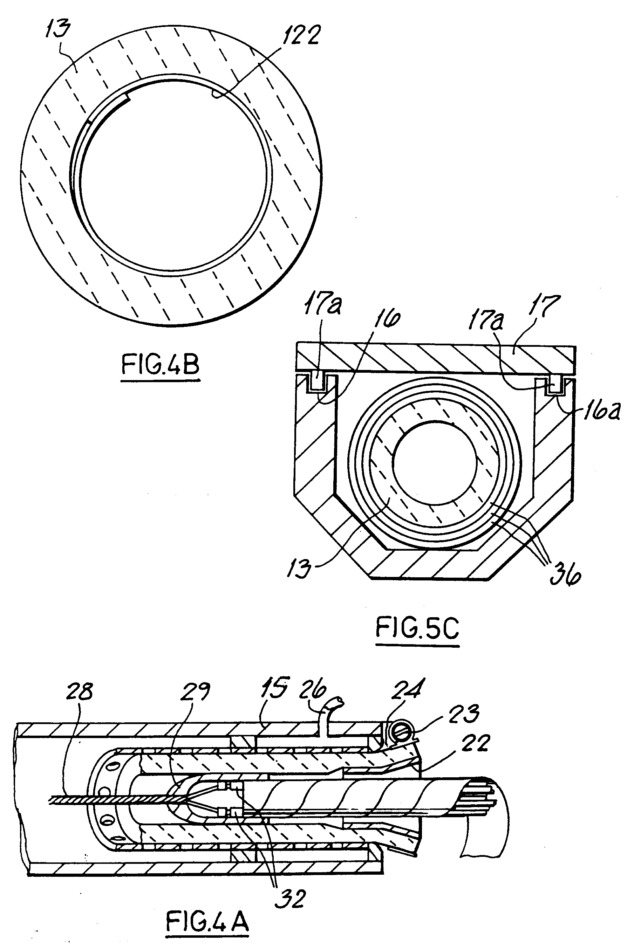

An alternative to the funnel is shown in Figure 4B. A sheet metal spring 122 is reduced in diameter by squeezing, and inserted into the free end of the sheath, then let go. The sheet metal spring expands, expanding with it, the sheath.

The other end of the sheath where it protrudes from the left hand end of the box 15 is also sealed as will be described later, so that the box chamber 15 is adequately sealed all round.

The idea, now, is that with the sheath 13 sealed in the sealed box 15, its internal diameter is pneumatically expanded. To this end, the box 15 is evacuated through a vacuum connection 26. At the same time, an overpressure can also be introduced to the interior of the sheath by a pressure air connection 27 at the left hand end of the box.

The pressure air connection 27 can, before sealing off, be used to blow through the installed sheath 13 a butterfly-type carrier (not shown) for a hauling line 28 which will be attached to haul the bundle of tubes through the sheath.

In any event, the differential pressure from inside to outside the sheath is such as will cause the wall of the sheath to compress and indeed to cause the internal diameter of the sheath 13 to expand by some 5mm, to the condition illustrated in cross-section in Figure 2. In this condition there is no substantial frictional resistance to the passage of the tube bundle through the sheath.

The diameter of the funnel is chosen appropriately to the diameter of the sheath to ensure good scaling relationship. Different funnel configurations and sizes might be used in connection with the process described herein.

The leading end of the tube bundle to be inserted in the sheath is attached to a pig 29 for guiding its passage through the sheath. The pig 29 is hauled through the sheath by the hauling line or cable 28 which is on a winch 35 situated at the end of the box 15. The cable 28 is attached to the end of the bundle of tubes 11 by two stepped locking inserts 32, better seen in figure 6 and 7. A larger diameter such insert 32a is inserted into a larger tube and a smaller such insert 32b is inserted into a smaller tube 11. Hauling wire or cable 28 is introduced into a free end bore 33 of the insert, which is cut away so as to expose a lateral bore aperture 34 through which the hauling wire or cable 28 can be pulled and, to secure the wire or cable, can be knotted. The two wires are quickly spliced to become one which passes through a bore 29a in the nose of the pig 29.

The pig 29 itself is a bullet shaped member having a rearwardly open cavity into which the leading end of the tube bundle fits. The pig 29 is thus slightly larger in diameter than the tube bundle, but not so big as to give rise to excessive frictional drag against the inner wall of the expanded sheath.

With the hauling wire or cable 28 through the sheath, the leading end of the wrapped bundle of tubes 11 in the pig 29 and the pig in the funnel 22, the box 15 is evacuated to expand the inner wall of the sheath 13 and the pig is hauled through the sheath by a winch 35.

As mentioned above, several cross-sectional sizes of tube bundles are often specified which fit into one of the standard range of sheaths. To accommodate the range, the apparatus includes a corresponding range of box 15 inserts 36 comprising different diameter apertured or perforated tubes which in use closely surround the sheath 13 in the box. The inserts 36 are, like the box 15 itself, hinged so as to open and close with the box 15. The inserts 36 are supported and held in position when in the box 15 on shaped blocks 37. In Figure 5C nested inserts 36 are shown - the larger diameter inserts 36 are left in place, the smaller ones inserted inside them, which further reduces the free volume in the box and the pressure air or evacuation requirement.

The apparatus illustrated in Figure 3 can conveniently insert a wrapped bundle of tubes into a 20 or 25 meter length of sheath. For pythons longer than this the wrapped tube bundle is inserted serially into two or more, usually four, such lengths of sheath to make a python fifty or one hundred meters in length. This can be done as shown in Figure 8 in which four similar evacuable boxes 81, 82, 83, 84 are set side-by-side. Lengths of, say, 25 meters of sheath 13 are placed in each box, each with a clamped funnel as described above.

The winch 35 is placed at the end of one 84, of the boxes. Between each adjacent pair of boxes is a capstan 85 around which the hauling line 28 can bend so that it can follow a serpentine path through the four boxes.

With the hauling line 28 so threaded through all of the sheaths 13 in the boxes 81, 82, 83, 84 the pig 29 is attached to the leading end of the tube bundle as already described. The boxes are evacuated to expand the inner diameter of its sheath 13 and the pig 29 hauled through until the required length of tube bundle has traversed the funnel of box 81. This is indicated e.g. by a mark placed on the wrapped bundle as it is being supplied (assumedly for present purposes from a continuous supply).

The sheath 13 of the box 81 will now be correctly positioned on the wrapped tube bundle and is now fixed in place by releasing the vacuum in box 81 so that the foam sheath resiles back to its original size which is adequate to grip the wrapped bundle and maintain its position on it. The funnel can now be removed.

Because of the half turns around the capstans 85, however, the tube bundle still has not reached the exit end of the box 84. Hauling now continues until the leading edge of the sheath from box 81 abuts the tail end of the sheath of the box 82, the sheathed bundle now bending around the capstan 85 between boxes 81 and 82. The funnel in the tail end of box 82 at this stage prevents actual contact between the adjacent butt ends, but this can be removed (being split) once the vacuum is lifted from the box 82 and the sheath therein returns to its original, unexpanded condition wherein it grips the tube bundle, as before.

This process is repeated for the other two boxes 83, 84 until all of the sheaths are in abutting relationship when they may be adhesively secured together at their butt ends.

The finished assembly is then wrapped in a protective cover in the normal way.

The tube bundle is, as illustrated, assembled continously with the sheathing thereof according to the invention. Individual tubes 11 are withdrawn from a creel or drum support arrangment 101 (Figures 3 and 8) through a collecting guide comb 102 and a bundle forming die 103 and from there pass to a cling-film wrapping machine 104 (of conventional type). The wrapped bundle is fed from there into the box 15 (or the first box 81, Figure 8) by a caterpillar-track like belt feeder 105.

## Claims

1. A method for making a python by inserting a bundle of tubes (11) into an elongate foam sheath (13) and increasing the length of sheath which may be applied in a single operation by expanding the sheath during insertion of the bundle of tubes by applying a partial vacuum to the exterior of the sheath, characterised in that a length of foam sheath (13) is placed in a sealable chamber (15) and a differential pressure between the inside and outside of the sheath (13) is applied by evacuating the chamber (15) through a vacuum connection (26) to the chamber (15) so as to expand the inner diameter of the sheath (13), the bundle of tubes (11) is introduced into the sheath (13) at one end of the chamber (15), and passed through the expanded sheath to emerge from the other end of the chamber (15), and the differential pressure is then removed so that the said inner diameter resiles back to grip the bundle (11), in which the sealable chamber (15) comprises an elongate box (16) with an elongate lid (17) extending along the length of the box (16) and movable into an open position to allow the foam sheath (13) to be placed in the box (16).

2. A method according to claim 1, characterised in that the bundle of tubes (11) is introduced through one end of the sheath (13) via a funnel (22) around which the sheath (13) may be clamped.

3. A method according to claim 1 or claim 2, characterised in that the elongate box (16) can accommodate some 25 metres of sheath (13).

4. A method according to any one of claims 1 to 3, characterised in that the internal diameter of the sheath (13) is enlarged by up to 20 mm.

5. A method according to any one of claims 1 to 4, characterised in that the leading end of the bundle of tubes (11) is attached to a pig (29) for guiding its passage through the sheath (13).

6. A method according to claim 5, characterised in that the pig (29) is hauled through the sheath (13) by a cable and winch (28,35).

7. A method according to any one of claims 1 to 6, characterised in that the bundle of tubes (11) is inserted serially into two or more lengths of sheath (13).

8. Apparatus for making a python by inserting a bundle of tubes (11) into an elongate foam sheath (13) and increasing the length of sheath which may be applied in a single operation by expanding the sheath during insertion of the bundle of tubes (11) by applying a partial vacuum to the exterior of the sheath (13), characterised by comprising a sealable chamber (15) in the form of an elongate box (16) with an elongate lid (17) extending along the length of the box (16) and movable into an open position to allow the foam sheath (13) to be placed in the box (16) and means for evacuating the chamber (15) so as to expand the inner diameter of the sheath (13).

9. Apparatus according to claim 8, characterised in that the elongate box (16) is some 25 metres long.

10. Apparatus according to claim 8 or claim 9, characterised by comprising a funnel (22) around which the sheath (13) may be clamped and through which the bundle of tubes (11) may be introduced through one end of the sheath (13).

11. Apparatus according to any one of claims 8 to 10, characterised by comprising a pig (29) to which the leading end of the bundle of tubes is attached for guiding its passage through the sheath (13).

12. Apparatus according to claim 11, characterised by comprising cable and winch means (28,31) for hauling the pig (29) through the sheath (13).

13. Apparatus according to any one of claims 8 to 12, characterised in that two or more sealable chambers (15) are arranged side-by-side with intermediate capstan or like guide means (85) around which the bundle of tubes (11) can bend to pass from one chamber to the next.

14. Apparatus according to any one of claims 8 to 13, comprising a sheath surround (36) adapted to the outer sheath diameter and being apertured.

15. Apparatus according to claim 14, characterised in that the sheath surround (36) is hinged so as to open and close with the lid (17).

16. Apparatus according to claim 15, characterised by comprising a set of sheath surrounds (36).

## Patentansprüche

1. Verfahren zum Herstellen einer Schlange durch Einführen eines Rohrbündels (11) in einen langgestreckten Schaummantel (13) und Erhöhen der Länge des Mantels, der in einer einzigen Operation aufgebracht werden kann, indem der Mantel während des Einführens des Rohrbündels durch Aufbringen eines Unterdrucks auf das Äußere des Mantels expandiert wird,
**dadurch gekennzeichnet,**
daß eine Länge des Schaummantels (13) in eine abdichtbare Kammer (15) angeordnet wird und ein Differenzdruck zwischen dem Inneren und Äußeren des Mantels (13) durch Evakuieren der Kammer (15) über einen Vakuumanschluß (26) zu der Kammer (15) aufgebracht wird, um den Innendurchmesser des Mantels (13) zu expandieren, wobei das Rohrbündel (11) an einem Ende der Kammer (15) in den Mantel (13) eingeführt wird, durch den expandierten Mantel hindurchgeht und vom anderen Ende der Kammer (15) wieder auftaucht, daß der Differenzdruck dann entfernt wird, derart, daß der innere Durchmesser elastisch zurückspringt, um das Bündel (11) zu ergreifen, wobei die abdichtbare Kammer einen langgestreckten Kasten (16) mit einem langgestreckten Deckel (17) umfaßt, der sich entlang der Länge des Kastens (16) erstreckt und in eine offene Stellung bewegbar ist, um eine Anordnung des Schaummantels (13) in dem Kasten zu ermöglichen.

2. Verfahren nach Anspruch 1, dadurch gekennzeichnet, daß das Rohrbündel (11) durch ein Ende des Mantels (13) über einen Trichter (22) eingeführt wird, um den herum der Mantel (13) gespannt werden kann.

3. Verfahren nach Anspruch 1 oder 2, dadurch gekennzeichnet, daß in dem Kasten (16) etwa 25 Meter des Mantels aufnehmbar sind.

4. Verfahren nach einem der Ansprüche 1 bis 3, dadurch gekennzeichnet, daß der Innendurchmesser des Mantels (13) um bis zu 20 mm vergrößert wird.

5. Verfahren nach einem der Ansprüche 1 bis 4, dadurch gekennzeichnet, daß das führende Ende des Rohrbündels (11) an einem Zugelement (pig) (29) befestigt ist, das das Rohrbündel durch den Mantel (13) führt.

6. Verfahren nach Anspruch 5, dadurch gekennzeichnet, daß das Zugelement (pig) (29) mit Seil und Winde (28,35) durch den Mantel (13) hindurchgezogen wird.

7. Verfahren nach einem der Ansprüche 1 bis 6, dadurch gekennzeichnet, daß das Rohrbündel (11) hintereinander in zwei oder mehr Mantellängen eingeführt wird.

8. Vorrichtung zum Herstellen einer Schlange durch Einführen eines Rohrbündels (11) in einen langgestreckten Schaummantel (13) und Erhöhen der Länge des Mantels, der in einer einzigen Operation aufgebracht werden kann, indem der Mantel während des Einführens des Rohrbündels (11) durch Aufbringen eines Unterdrucks auf das Äußere des Mantels (13) expandiert wird,
**dadurch gekennzeichnet,**
daß eine abdichtbare Kammer (15) in Form eines langgestreckten Kastens (16) mit einem langgestreckten Deckel (17) vorgesehen ist, der sich entlang der Länge des Kastens (16) erstreckt und in eine offene Stellung bewegbar ist, um eine Anordnung des Schaummantels (13) in dem Kasten zu ermöglichen, und weiterhin Mittel zum Evakuieren der Kammer (15) vorgesehen sind, so daß der innere Durchmesser des Mantels (13) expandiert wird.

9. Vorrichtung nach Anspruch 8, dadurch gekennzeichnet, daß der langgestreckte Kasten etwa 25 Meter lang ist.

10. Vorrichtung nach Anspruch 8 oder 9, dadurch gekennzeichnet, daß sie einen Trichter (22) umfaßt, um den der Mantel (13) geklemmt werden kann und durch den das Rohrbündel (11) in ein Ende des Mantels (13) einführbar ist.

11. Vorrichtung nach einem der Ansprüche 1 bis 10, dadurch gekennzeichnet, daß ein Zugelement (pig) (29) vorgesehen ist, an dem das fuhrende Ende des Rohrbündels für seinen Durchgang durch den Mantel (13) befestigt ist.

12. Vorrichtung nach Anspruch 11, dadurch gekennzeichnet, daß eine Seil- und Windenvorrichtung (28,31) zum Hindurchziehen des Zugelements (pig) (29) durch den Mantel (13) vorgesehen ist.

13. Vorrichtung nach einem der Ansprüche 8 bis 12, dadurch gekennzeichnet, daß zwei oder mehr abdichtbare Kammern (15) nebeneinander mit dazwischenliegenden Capstanrollen oder dergleichen Führungsmittel (85) angeordnet sind, um die das Rohrbündel (11) zum Passieren von einer Kammer in die nächste umbiegbar ist.

14. Vorrichtung nach einem der Ansprüche 8 bis 13, dadurch gekennzeichnet, daß ein zu öffnendes und an den äußeren Durchmesser des Mantels angepaßtes Mantelumfassungelement (36) vorgesehen ist.

15. Vorrichtung nach Anspruch 14, dadurch gekennzeichnet, daß das Mantelumfassungselement (36) so angelenkt ist, daß es sich mit dem Deckel (17) öffnet und schließt.

16. Vorrichtung nach Anspruch 15, dadurch gekennzeichnet, daß ein Satz von Mantelumfassungselementen (36) vorgesehen sind.

## Revendications

1. Procédé de fabrication d'un python par introduction d'un faisceau de tubes (11) dans une gaine allongée (13) de mousse et par augmentation de la longueur de la gaine qui peut être appliquée en une seule opération par extension de la gaine pendant l'introduction du faisceau de tubes par application d'un vide partiel à l'extérieur de la gaine, caractérisé en ce qu'un tronçon de gaine (13) de mousse est placé dans une chambre (15) qui peut être fermée de manière étanche et une pression différentielle est appliquée entre l'intérieur et l'extérieur de la gaine (13) par évacuation de la chambre (15) par un raccord sous vide (25) relié à la chambre (15) de manière que le diamètre interne de la gaine (13) augmente, le faisceau de tubes (11) est introduit dans la gaine (13) à une première extrémité de la chambre (15) et est transmis dans la gaine agrandie de manière qu'il sorte à l'autre extrémité de la chambre (15), et la pression différentielle est alors supprimée afin que la périphérie interne se rétrécisse élastiquement en serrant le faisceau de tubes (11), et en ce que la chambre (15) qui peut être fermée comprend un caisson allongé (16) ayant un couvercle allongé (17) placé le long du caisson (16) et mobile en position d'ouverture afin que la gaine de mousse (13) puisse être placée dans le caisson (16).

2. Procédé selon la revendication 1, caractérisé en ce que le faisceau de tubes (11) est introduit par une première extrémité de la gaine (13) par l'intermédiaire d'un entonnoir (22) autour duquel la gaine (13) peut être serrée.

3. Procédé selon la revendication 1 ou 2, caractérisé en ce que le caisson allongé (16) peut loger 25 m de gaine environ (13).

4. Procédé selon l'une quelconque des revendications 1 à 3, caractérisé en ce que le diamètre interne de la gaine (13) augmente d'une dimension pouvant atteindre 20 mm.

5. Procédé selon l'une quelconque des revendications 1 à 4, caractérisé en ce que l'extrémité avant du faisceau de tubes (11) est fixée à un embout profilé (29) de guidage de son passage dans la gaine (13).

6. Procédé selon la revendication 5, caractérisé en ce que l'embout profilé (29) est tiré dans la gaine (13) par un câble et un treuil (28, 35).

7. Procédé selon l'une quelconque des revendications 1 à 6, caractérisé en ce que le faisceau de tubes (11) est introduit en série dans au moins deux tronçons de gaine (13).

8. Appareil de fabrication d'un python par introduction d'un faisceau de tubes (11) dans une gaine allongée (13) de mousse et par augmentation de la longueur de la gaine qui peut être appliquée en une seule opération par expansion de la gaine pendant l'introduction du faisceau de tubes (11) par application d'un vide partiel à l'extérieur de la gaine (13), caractérisé en ce qu'il comprend une chambre (15) qui peut être fermée de manière étanche, sous forme d'un caisson allongé (16) ayant un couvercle allongé (17) placé le long du caisson (16) et mobile vers une position d'ouverture afin que la gaine (13) de mousse puisse être placée dans le caisson (16), et un dispositif destiné à évacuer la chambre (15) afin que le diamètre interne de la gaine (13) augmente.

9. Appareil selon la revendication 8, caractérisé en ce que le caisson allongé (16) a une longueur d'environ 25 m.

10. Appareil selon la revendication 8 ou 9, caractérisé en ce qu'il comprend un entonnoir (22) autour duquel la gaine (13) peut être serrée et dans lequel le faisceau de tubes (11) peut être introduit par une première extrémité de la gaine (13).

11. Appareil selon l'une quelconque des revendications 8 à 10, caractérisé en ce qu'il comprend un embout profilé (29) auquel est fixée l'extrémité avant du faisceau de tubes afin que son passage dans la gaine (13) soit guidé.

12. Appareil selon la revendication 11, caractérisé en ce qu'il comprend un dispositif à câble et treuil (28, 31) destiné à tirer l'embout profilé (29) dans la gaine (13).

13. Appareil selon l'une quelconque des revendications 8 à 12, caractérisé en ce que deux chambres (15) au moins qui peuvent être fermées sont placées côte à côte avec un cabestan intermédiaire ou un dispositif analogue de guidage (85) autour duquel le faisceau de tubes (11) peut être plié afin qu'il passe d'une chambre à la suivante.

14. Appareil selon l'une quelconque des revendications 8 à 13, comprenant un dispositif (36) entourant la gaine et adapté au diamètre externe de la gaine et ayant des ouvertures.

15. Appareil selon la revendication 14, caractérisé en ce que le dispositif entourant la gaine (36) est articulé afin qu'il s'ouvre et se ferme avec le couvercle (17).

16. Appareil selon la revendication 15, caractérisé en ce qu'il comprend un jeu d'organes destiné à entourer la gaine (36).
